# EUROPEAN PATENT SPECIFICATION

(11) **EP 0 537 239 B1**
(45) Date of publication and mention of the grant of the patent: **28.09.1994**
(21) Application number: 91912384.4
(22) Date of filing: 27.06.1991
(51) Int. Cl.: F16L 55/165, F16L 58/10, B29C 63/34

(54) **METHOD AND INSTALLATION FOR FITTING AN INNER TUBE IN AN EXISTING PIPELINE**
VERFAHREN UND VORRICHTUNG ZUM ANBRINGEN EINES INNENROHRES IN EINER BESTEHENDEN ROHRLEITUNG
PROCEDE ET DISPOSITIF DE MONTAGE D'UN TUBE A L'INTERIEUR D'UNE CANALISATION EXISTANTE

(30) Priority: 05.07.1990 NL 9001540
(43) Date of publication of application: 21.04.1993
(73) Proprietor: WAVIN B.V., NL-8011 CW Zwolle (NL)
(72) Inventor: VAN DIJK, Berend, Jan, NL-7776 XA Slagharen (NL); ELZINK, Willen, Johan, NL-7701 LG Dedemsvaart (NL); TER WIJLEN, Hendrikus, NL-7701 AA Dedemsvaart (NL)
(74) Representative: van der Veken, Johannes Adriaan
(86) International application number: NL9100111
(87) International publication number: WO9201189

(56) References cited:
- EP-A- 0 233 006
- WO-A-88/01707
- GB-A- 2 032 043

## Description

The invention relates to a method for fitting an inner tube in an existing pipe-line by introducing into the pipe-line an inner tube of thermoplastics having an external diameter being smaller than the internal diameter of the pipe-line, followed by radial enlargement of the diameter of the inner tube until the inner tube lies tightly against the inner wall of the pipe-line.

A method of this type for the protection of an existing pipe-line against erosion, corrosion and deposits of solids on the surface, and also to make walls of such a pipe-line impermeable, is known from US Patent 2,794,758. In this method the inner tube particularly of polyethylene, which is inserted, has a diameter being approximately 5 to 20% smaller than the internal diameter of the pipe-line. The inner tube is inflated by means of a pressure fluid applied in the inner tube until the latter engages tightly the inside of the pipe-line.

On the other hand, it is known from US Patent 4,818,314 to fit a plastic lining in an existing low-pressure pipe-line and also a high-pressure pipe-line by fitting an inner tube made of polyethylene having a very high molecular weight into the pipe-line, which inner tube is diametrically enlarged by about 6% by the use of a hot fluid under pressure.

Both methods present the disadvantage that the difference between the external diameter of the inner tube and the internal diameter of the pipe-line is very small, so that the insertion of the inner tube is awkward. Thus, for example, it is not possible to provide a pipe-line having sharp bends, or a pipe-line which may have unknown local constrictions, with an inner tube in this way.

The two methods therefore do not offer a good solution in the case of older service pipes for gas, or more particularly water, where the small diameters of the pipe-line can be accompanied by a large number of bends and inspection from the inside using robots is not yet possible.

Attempts have been made to overcome this drawback by fitting, in accordance with US Patent 3,294,121, an inner tube having an appreciably smaller diameter into a pipeline, but said inner tube is fixed only at the ends by stretching. Of course this leads to an appreciable reduction in the capacity of the pipe due to the large difference in diameter. Moreover, this requires a higher pressure drop over the pipe-line, which in many cases is impossible.

The aim of the invention is now to provide a method for the insertion of an inner tube in an existing pipe-line involving only slight reductions in diameter and which is also in particular, but not exclusively, suitable for small pipes with bends, constrictions and the like.

This aim is achieved according to the invention in that the inner tube is enlarged by radial stretching and that the ratio of the external diameter of the inner tube to the internal diameter of the pipe-line is less than 0.6.

When using an inner tube as described above, in particular an inner tube for which the ratio is at most 0.5, it is possible to work with an inner tube which can be inserted easily in an existing pipe-line and which is then pressed against the inner wall of the pipe-line by means of a pressure fluid.

The method according to the invention has particularly advantages in the internal lining of a pipeline made of tubes which can release certain undesired substances into a medium transported through the tubes. This applies in particular in the case of a lead water pipe-line being mechanically still in good condition but having the drawback of the undesired release of lead into the drinking water.

In particular in the case of service pipes, that is to say from the main pipe to the user's private property or water meter, it is very difficult to dig up these pipes since this usually leads to severe damage to the pavement, plants and paving.

Although the customary thermoplastics which are readily radially stretchable, such as polyvinyl chloride, polyethylene or polypropylene, can be used as the material for the inner tube, the inner tube advantageously consists of a thermoplastic polyester, in particular polyethylene terephthalate.

The last-mentioned material can be radially stretched very readily under the correct conditions and even very thin walls, which after stretching are thinner than 1 mm and preferably thinner than 0.4 mm, show no formation of cracks in the walls.

This offers the possibility of using a thin-walled inner tube as the starting material, which yet further facilitates the insertion.

Particularly advantageously, the inner tube is heated during radial stretching and, if desired, the inner tube can also be heated to above the glass transition temperature during insertion, in order to make the material more flexible, but the material is then preferably not so warm that the inner tube is axially stretched during insertion. The temperature of the material must remain below the crystalline melting point in order to obtain optimum characteristics after stretching.

It is clear that when a thin-walled inner tube is used, the final inner tube forms an inner lining which serves merely as a sort of lining of the inner wall of the existing pipe-line and makes no or slight contribution to the mechanical strength of the pipe-line. However, the advantage of the improved physical charac- teristics, such as, for example, the resistance to stress corrosion, is utilised by stretching.

It is, of course, also possible to employ the method in a pipe-line which has mechanical defects, such as a steel pipe-line or sewage pipes attacked by corrosion. In this case an inner tube with a large wall thickness must be used as the starting material, so that, after stretching, the inner tube is able to withstand the full internal pressure of the medium transported through the pipe-line. In this case optimum use is then made of the mechanical properties of the inner tube material, which are also greatly improved by stretching.

It is pointed out that it is known that many physical and mechanical characteristics of tubes made of thermoplastics are appreciably improved by stretching, but methods of this type, however, serve only to produce stretched tubes under accurately controlled conditions in industrial circumstances, but not for the internal lining of an existing pipe-line.

Finally, the invention relates to an installation for fitting an inner tube in an existing pipeline, comprising a coupling piece which can be detachably fixed to an existing pipe-line and through which an inner tube can be passed, the coupling piece having an internal diameter being substantially identical to the external diameter of an unstretched inner tube and being provided with fixing means for fixing the inner tube, at that side which faces away from the connection to an existing pipeline, so that it is resistant to tensile strain, and being provided with fluid inlet means in order to admit a heating and/or pressure fluid into the inner tube, and said coupling piece being provided with venting means in order to be able to remove the air from the space between the inside of a pipe-line and the outside of an inner tube characterized in that said coupling piece is provided with a loose inner bush which has an internal diameter being substantially identical to the external diameter of an unstretched inner tube. This makes it possible to use a standard coupling as the starting equipment and to produce only one suitable inner bush for the required size of inner tube. This installation has the advantage that the coupling piece used can be a standard product, which with slight modifications can be used for various sizes of inner tube, and, moreover, a good sealing connection which has good resistance to tensile strain is possible even in the case of a soft, readily stretching inner tube.

Very advantageously said coupling piece is provided with swivel joints for tensile resistant jointing to a pipe line and to an inner tube. The invention will now be illustrated by means of an embodiment with reference to the drawing, in which:
- Fig. 1: shows a cross-section of an existing pipe-line and an inner tube fitted therein, prior to stretching;
- Fig. 2: shows the same pipe-line with the stretched inner tube fitted therein; and
- Fig. 3: shows an installation for fitting an inner tube in an existing pipe-line, comprising a coupling piece for connecting the pipe-line, the inner tube and heating and/or pressure media fluids.

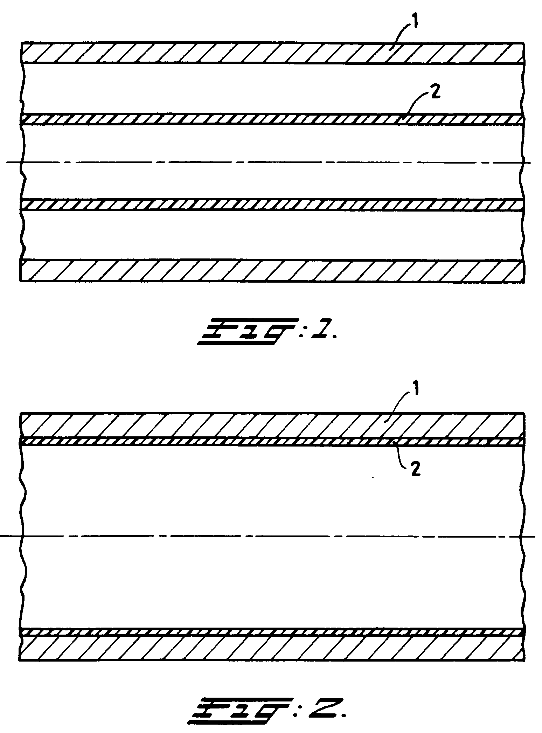

Fig. 1 shows a pipe-line made of a lead tube 1 which has an external diameter of 22 mm and an internal diameter of 19 mm.

A 9.5 × 0.9 mm inner tube 2 of polyethylene terephthalate is fitted, after preheating to 50°C, in the lead tube 1 having a length of approximately 6 metres.

The inner tube 2 is then heated to 90°C using hot water and inflated using compressed air under 5 bar.

The inner tube 2 is then uniformly radially stretched and comes to lie tightly against the inner wall of the lead tube 1 as an inner tube lining 2′.

In a similar way, polyethylene terephthalate inner tubes 12.8 mm in diameter and 1.0 mm thick are stretched to a diameter of 28 mm, and small 4 × 0.5 mm tubes are stretched to a diameter of 10 mm.

In the case of these polyethylene terephthalate inner tubes it was found to be important that the material was not axially stretched, or was axially stretched only to a very slight extent, before radial stretching because otherwise the already axially stretched tube has become too rigid to enable it also to be inflated radially.

For polyethylene terephthalate a radial stretching of 2 to 3 times the original diameter is found to be very readily possible.

It is, of course, also possible to work with a pipeline made of copper or a sewage pipe-line made of the materials customary for this purpose.

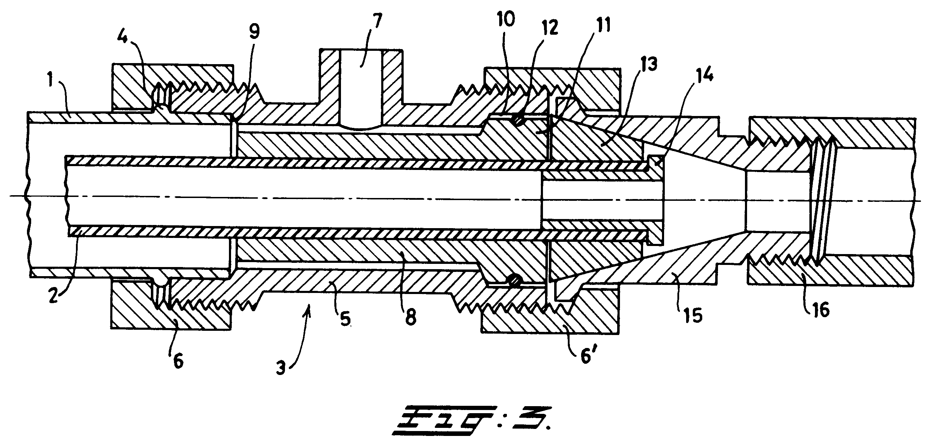

In Fig. 3, which shows an installation for fitting an inner tube in an existing pipe-line, a coupling piece 3 is shown which is connected to an existing pipe-line 1 by turning a coupling nut 6 on the housing 5 of the coupling piece 3. Using a cutting ring 4 on the pipe-line 1, the coupling piece can be fixed detachably to the pipe-line in a manner resistant to tensile strain.

The coupling piece 3 is provided with a vent 7. A loose inner bush 8 is placed in the coupling piece 3, for which a conventional T-piece can be used, the said inner bush being positioned with a broadened section in the chamber 10 at that side of the coupling piece which faces away from the connection to the pipe-line and being sealed by means of a rubber ring 12.

The external diameter of the inner bush 8 is smaller than the internal diameter of the housing 5 of the coupling piece 3, so that it is possible to remove the air from the space between the inside of the pipe-line 1 and the outside of the inner tube 2 which has a through-connection to vent opening 7.

Inner tube 2 is pushed through the inner bush 8 and provided at the end with an engaging bush 14. A conical clamping ring 13 is fitted around the end of the inner tube 2. By turning the coupling nut 6′, the inner tube 2 is connected, in a manner resistant to tensile strain, to coupling piece 3 by securing conical ring 15 on clamping ring 13. If a rubber clamping ring 13 is used, said ring can ensure fixing and sealing at the same time. The engaging bush 14 prevents deformation of the inner tube 2 and thus inadequate fixing and/or sealing. A connection 16, which serves to supply a heating fluid, such as steam, and/or a pressure fluid, such as compressed air, is fitted to the conical ring 15.

One method for stretching is as follows. By, after fitting couplings 3 on either side of the pipe-line 1 containing the inserted inner tube 2, first passing through a hot fluid, such as steam, until the inner tube has been sufficiently heated, then closing the connection 16 on one of the two sides and admitting compressed air at the other side, the inner tube 2 is stretched until it lies tightly against the inside of the pipe-line 1. During stretching, the air being present between the inside of the pipe-line 1 and the outside of the inner tube 2 can escape via the space between the inner bush 8 and the housing 5 of the coupling piece 3 to the vent opening 7.

The couplings 3 are then removed, those portions of the inner tube 2 which project outside the pipe-line 1 are removed and the pipe-line 1 is again connected to the other sections of the pipe system of which it forms part.

## Claims

1. Method for fitting an inner tube in an existing pipe-line by introducing into the pipe-line an inner tube of thermoplastic having an external diameter being smaller than the internal diameter of the pipe-line, followed by radial enlargement of the diameter of the inner tube until the inner tube lies tightly against the inner wall of the pipe-line, characterised in that the inner tube is enlarged by radial stretching and that the ratio of the external diameter of the inner tube to the internal diameter of the pipe-line is less than 0.6.

2. Method according to claim 1, characterised in that said ratio is at most 0.5 and preferably greater than 0.2.

3. Method according to claims 1 or 2, characterised in that the inner tube is heated during radial stretching.

4. Method according to any one of claims 1 to 3, characterised in that during insertion the inner tube is heated to a temperature above the glass transition temperature of the plastic and below the crystalline melting point.

5. Method according to any one of the preceding claims, characterised in that the inner tube consists of a thermoplastic polyester, preferably polyethylene terephthalate.

6. Method according to any one of the preceding claims, characterised in that after radial stretching the inner tube has a wall thickness being less than 1 mm, preferably less than 0.5 mm, or that after radial stretching the inner tube has a wall thickness which is able to withstand a pressure of more than 1 bar.

7. Method according to any one of the preceding claims, characterised in that the existing pipe-line comprises tubes which have in their wall substances which can be released into a medium transported through said pipe-line, preferably lead tubes.

8. Installation for fitting an inner tube in an existing pipe-line, comprising a coupling piece which can be detachably fixed to an existing pipe-line and through which an inner tube can be introduced, the coupling piece (3) having an internal diameter being substantially identical to the external diameter of an unstretched inner tube (2) and being provided with fixing means for fixing the inner tube (2), at that side which faces away from the connection to an existing pipe-line (1), so that it is resistant to tensile strain, and being provided with fluid inlet means (16) in order to admit a heating and/or pressure fluid, and said coupling piece (3) being provided with venting means (7) in order to be able to remove the air from the space between the inside of pipe-line (1) and the outside of an inner tube (2) characterized in that said coupling piece (3) is provided with a loose inner bush (8) which has an internal diameter being substantially identical to the external diameter of an unstretched inner tube (2).

9. Installation according to claim 8, characterised in that said coupling piece (3) is provided with swivel joints for tensile resistant jointing to a pipe line (1) and to an inner tube (2).

## Patentansprüche

1. Verfahren zum Anbringen eines Innenrohres in einer bestehenden Rohrleitung, indem in die Rohrleitung ein Innenrohr aus thermoplastischem Kunsstoff mit einem Außendurchmesser, der kleiner ist als der Innendurchmesser der Rohrleitung, eingeführt wird, gefolgt von einer radialen Aufweitung des Durchmessers des Innenrohres, bis das Innenrohr eng an der Innenwand der Rohrleitung anliegt, dadurch gekennzeichnet, daß das Innenrohr durch radiales Recken aufgeweitet wird und daß das Verhältnis des Außendurchmessers des Innenrohres zum Innendurchmesser der Rohrleitung kleiner ist als 0,6.

2. Verfahren nach Anspruch 1, dadurch gekennzeichnet, daß das Verhältnis höchstens 0,5 beträgt und vorzugsweise größer ist als 0,2.

3. Verfahren nach Anspruch 1 oder 2, dadurch gekennzeichnet, daß das Innenrohr während des radialen Reckens erwärmt wird.

4. Verfahren nach einem der Ansprüche 1 bis 3, dadurch gekennzeichnet, daß das Innenrohr während des Einsetzens auf eine Temperatur über der Einfriertemperatur des Kunststoffs und unterhalb des kristallinen Schmelzpunktes erwärmt wird.

5. Verfahren nach einem der vorhergehenden Ansprüche, dadurch gekennzeichnet, daß das Innenrohr aus einem thermoplastischen Polyester, vorzugsweise Polyethylenterephthalat, besteht.

6. Verfahren nach einem der vorhergehenden Ansprüche, dadurch gekennzeichnet, daß das Innenrohr nach dem radialen Recken eine Wanddicke besitzt, die kleiner ist als 1 mm, vorzugsweise kleiner als 0,5 mm, oder daß das Innenrohr nach dem radialen Recken eine Wanddicke besitzt, die in der Lage ist, einen Druck von mehr als 1 bar auszuhalten.

7. Verfahren nach einem der vorhergehenden Ansprüche, dadurch gekennzeichnet, daß die bestehende Rohrleitung Rohre umfaßt, die in ihrer Wand Substanzen aufweisen, die in ein durch die Rohrleitung gefördertes Medium freigesetzt werden können, vorzugsweise Bleirohre.

8. Vorrichtung zum Anbringen eines Innenrohres in einer bestehenden Rohrleitung, bestehend aus einem Kupplungsstück, das lösbar an einer bestehenden Rohrleitung angebracht und durch das ein Innenrohr hindurchgeführt werden kann, wobei das Kupplungsstück (3) einen Innendurchmesser besitzt, der im wesentlichen gleich dem Außendurchmesser eines ungereckten Innenrohres (2) ist, und mit einer Befestigungseinrichtung zum Festlegen des Innenrohres (2) an der Seite, die von der Verbindung mit einer bestehenden Rohrleitung (1) abgewandt ist, versehen ist, derart, daß es widerstandsfähig gegen Zugbeanspruchung ist, und mit einer Fluideinlaßeinrichtung (16) versehen ist, um ein Heiz- und/oder Druckfluid einzubringen, und wobei das Kupplungsstück (3) mit einer Entlüftungseinrichtung (7) versehen ist, um die Luft aus dem Raum zwischen der Innenseite einer Rohrleitung (1) und der Außenseite eines Innenrohres (2) abführen zu können, dadurch gekennzeichnet, daß das Kupplungsstück (3) mit einer losen Innenbuchse (8) versehen ist, die einen Innendurchmesser besitzt, der im wesentlichen gleich dem Außendurchmesser des ungereckten Innenrohres (2) ist.

9. Vorrichtung nach Anspruch 8, dadurch gekennzeichnet, daß das Kupplungsstück (3) mit Drehverbindungen für eine zugfeste Verbindung mit einer Rohrleitung (1) und mit einem Innenrohr (2) versehen ist.

## Revendications

1. Procédé pour installer un tube intérieur dans une canalisation existante par l'introduction dans la canalisation d'un tube intérieur en matière thermoplastique ayant un diamètre extérieur inférieur au diamètre intérieur de la canalisation, suivie par un élargissement radial du diamètre du tube intérieur jusqu'à ce que ce dernier s'appuie étroitement contre la paroi intérieure de la canalisation, caractérisé en ce que le tube intérieur est élargi par un étirage radial, et en ce que le rapport du diamètre extérieur du tube intérieur sur le diamètre intérieur de la canalisation est inférieur à 0,6.

2. Procédé selon la revendication 1, caractérisé en ce que ledit rapport est au plus égal à 0,5 et de préférence supérieur à 0,2.

3. Procédé selon la revendication 1 ou 2, caractérisé en ce que le tube intérieur est chauffé pendant son étirage radial.

4. Procédé selon l'une quelconque des revendications 1 à 3, caractérisé en ce que, pendant son insertion, le tube intérieur est chauffé à une température supérieure à la température de transition vitreuse de la matière plastique et inférieure au point de fusion cristalline.

5. Procédé selon l'une quelconque des revendications précédentes, caractérisé en ce que le tube intérieur est constitué d'un polyester thermoplastique, de préférence de polyéthylène-téréphtalate.

6. Procédé selon l'une quelconque des revendications précédentes, caractérisé en ce qu'après étirage radial, le tube intérieur a une épaisseur de paroi inférieure à 1 mm, de préférence inférieure à 0,5 mm, ou en ce qu'après étirage radial, le tube intérieur a une épaisseur de paroi capable de résister à une pression supérieure à 1 bar.

7. Procédé selon l'une quelconque des revendications précédentes, caractérisé en ce que la canalisation existante est constituée de tubes qui, dans leur paroi, contiennent des substances susceptibles d'être libérées dans un agent transporté à travers ladite canalisation, de préférence de tubes en plomb.

8. Dispositif pour installer un tube intérieur dans une canalisation existante, comportant un élément d'accouplement apte à être fixé d'une manière détachable à une canalisation existante et à travers lequel un tube intérieur peut être introduit, l'élément d'accouplement (3) possédant un diamètre intérieur sensiblement identique au diamètre extérieur d'un tube intérieur (2) non étiré et étant muni de moyens de fixation destinés à fixer le tube intérieur (2), du côté tourné à l'opposé du raccordement avec une canalisation (1) existante, de façon qu'il puisse résister à une contrainte de traction, et de moyens d'introduction de fluide (16) pour admettre un fluide de chauffage et/ou sous pression, et ledit élément d'accouplement (3) étant pourvu de moyens d'évacuation (7) pour pouvoir éliminer l'air de l'espace compris entre l'intérieur de la canalisation (1) et l'extérieur d'un tube intérieur (2), caractérisé en ce que ledit élément d'accouplement (3) est muni d'un manchon intérieur lâche (8) qui possède un diamètre intérieur sensiblement identique au diamètre extérieur d'un tube intérieur (2) non étiré.

9. Dispositif selon la revendication 8, caractérisé en ce que ledit élément d'accouplement (3) est pourvu de joints articulés pour permettre une jonction résistante à la traction avec une canalisation (1) et un tube intérieur (2).
